# EUROPEAN PATENT APPLICATION

(11) **EP 2 236 476 A1**
(43) Date of publication of application: **06.10.2010**
(21) Application number: 09305270.2
(22) Date of filing: 31.03.2009
(51) Int. Cl.: C04B 26/02, C04B 26/26

(54) **Process for preparing slurry**

(71) Applicant: Shell Internationale Research Maatschappij B.V., 2596 HR Den Haag (NL)
(72) Inventor: Laurens, Claire, 76650 Petit Couronne (FR); Parotelle, Pascal, 76650 Petit Couronne (FR); Vasudevan, Jeyan, 76650 Petit Couronne (FR)
(74) Representative: Matthezing, Robert Maarten

(57) **Abstract**

A process for preparing a slurry for surfacing applications is disclosed. Sand and filler, wherein at least 30wt% of the filler is titanium dioxide, are mixed. A binder emulsion is added to the mixture of sand and filler and is mixed with the sand and filler. The slurry can be used to prepare surface layers on buildings and roads, and such surface layers can reduce pollution in urban areas.

## Description

### Field of the Invention

The invention relates to a process for preparing a slurry for surfacing applications. The slurry can be used to provide surface layers on roads or buildings.

### Background of the Invention

It is desirable to reduce pollution, particularly in urban areas. Nitrogen oxides (NOx) can be removed from the environment if they are contacted with photocatalysts such as titanium dioxide (TiO₂). Methods have been developed to reduce pollution by incorporating titanium dioxide into the surfaces of roads and buildings.

Photocatalysts have been incorporated into cements and mortars, and these can be used to provide construction materials or to coat surfaces with a photocatalytic layer. WO 98/05601 discloses binders for cement compositions comprising photocatalysts such as titanium dioxide. EP 786 283 discloses a paving block comprising titanium dioxide, cement and sand.

Many surfaces in urban areas, particularly road surfaces, are made of asphalt and consist of a bituminous binder and aggregate. Coating these surfaces with a photocatalytic cement product can be difficult. EP 1 752 429 suggests that covering a bituminous road surface with a cement-based top coating is typically not succesful because mortars and cements cannot assure satisfactory mechanical properties when bound to a bituminous surface. To solve this problem, EP 1 752 429 proposes a cement mortar comprising a photocatalytic material, a plasticizing mixture, and silicon dioxide, wherein the mortar can coat the gaps in a bituminous road surface.

EP 2 014 726 discloses a composition comprising a photocatalyst dispersed in an organic dispersing phase that can be used to deposit photocatalytic coatings on bituminous road surfaces or building surfaces.

EP 1 350 774 discloses another method of incorporating photocatalysts into or onto construction materials. A suspension of a bitumen emulsion, hydrophobised titanium dioxide and hydrophobised calcium hydroxide can be sprayed to form surface coatings or can be used to prepare cold mix asphalt.

The present inventors have sought to provide an alternative method of providing road and building surfaces that comprise photocatalysts and are therefore capable of reducing atmospheric pollution.

### Summary of the Invention

Accordingly, the present invention provides a process for preparing a slurry for surfacing applications, comprising steps of:
a) mixing sand and filler, wherein at least 30wt% of the filler is titanium dioxide;
b) adding a binder emulsion to the mixture of sand and filler; and
c) mixing the binder emulsion with the sand and filler.

The present invention further provides a process for preparing a surface layer on a road or building, wherein a slurry is prepared by a process according to the invention and further comprising a step of applying the slurry to a surface of the road or building.

The inventors have found that by using titanium dioxide as some or all of the filler, a slurry can be prepared that can be applied to the surface of a road or a building, thereby providing a layer that can reduce atmospheric pollution. The method is simple and effective. This approach can be contrasted with that of EP 1 350 774 wherein the titanium dioxide is predispersed in a bituminous suspension before it is combined with sand or filler; in the present invention there is no requirement to pre-disperse the titanium dioxide in a suspension. In EP 1 350 774 the hydrophobised titania can be dispersed in a bitumen emulsion without breaking the emulsion, whereas in the present invention adding the binder emulsion to a mixture of sand and filler will cause the emulsion to break (the binder will agglomerate and water will be forced out of the slurry). Even though the slurry of the invention is not a homogeneous emulsion, it can be used to provide layers wherein titanium dioxide is sufficiently well dispersed that it effectively reduces atmospheric pollution.

### Detailed Description of the Invention

In step (a) of the invention, sand is mixed with filler. Aggregate (inorganic particulate material) is categorised by size, wherein size is measured by passing a sample of aggregate through a series of sieves. The fractions are categorised as filler (size smaller than 75µm), sand (size greater than 75µm and less than 2mm) and stones (size greater than 2mm). Therefore in step (a), inorganic particulate material with size smaller than 63µm is mixed with inorganic particulate material with size from 63µm to 2mm.

The sand is preferably a particulate inorganic material that has oxide or hydroxyl groups on its surface. Examples of suitable particulate inorganic materials are silica (e.g. in the form of quartz), limestone, iron oxide, alumina or gypsum. Preferably the sand is silica.

At least 30wt% of the filler is titanium dioxide. Preferably at least 50wt% of the filler is titanium dioxide. More preferably at least 80wt% of the filler is titanium dioxide. Most preferably all of the filler is titanium dioxide. Maximising the titanium dioxide content increases reduction of atmospheric pollution. However, significant reduction can still be achieved when less than 100wt% titanium dioxide is used. The remainder of the filler can be other particulate inorganic materials such as silica or limestone.

The titanium dioxide has preferably been surface treated such that the titanium dioxide is hydrophobic. A suitable titanium dioxide is Aeroxide^{®} P25 from Evonik Degussa.

The weight ratio of sand to filler is preferably in the range of from 1:1 to 50:1, preferably from 5:1 to 20:1 and most preferably about 10:1. A high proportion of sand provides a surface layer with a high void content, which may mean poor adhesion between the surface layer and the building or road. For road surfacings, sufficient sand should be added to achieve a skid resistant surface.

In step (a) of the invention, the sand is preferably mixed with filler in the presence of water. More preferably the sand is mixed with filler in the presence of water and a surfactant such as a quaternary alkyl ammonium salt. In a most preferred embodiment, the sand is added to a vessel, water and surfactant are added, and the filler is added gradually whilst continuously stirring.

In step (b), a binder emulsion is added to the mixture of sand and filler. The binder in the binder emulsion may be a bituminous binder or may be a synthetic binder having similar rheological and mechanical properties to a bituminous binder. In a preferred embodiment of the invention, the binder is a bituminous binder. Bituminous binders are commonly used because they are inexpensive and typically have suitable mechanical properties. In another embodiment of the invention, the binder is a clear synthetic binder. Clear synthetic binders are described for example in US 4,629,754. Clear binders may comprise components of vegetable origin, e.g. vegetable oils and natural rosins. Clear binders comprising components of vegetable origin are described in EP 1 466 878.

The penetration at 25°C of the binder (as measured according to EN 1426) is preferably between 10 and 350, more preferably between 10 and 250. The softening point of the binder (as measured according to EN 1427) is preferably between 30 and 70°C, more preferably between 35 and 55°C.

The binder emulsion may comprise a polymer. The polymer may be dispersed throughout the binder particles (a monophase emulsion) or may be dispersed as separate polymer particles within the binder emulsion (a biphase emulsion). Preferred polymers are thermoplastic elastomers or plastomers, for example styrenic block copolymers, styrene-butadiene rubbers (synthetic and natural), olefinic copolymers, polyurethane and polyether-polyester copolymers. The binder may comprise a mixture of more than one polymer. The amount of polymer in the binder is preferably from 0 to 15wt%, based upon the weight of the binder, preferably from 0 to 7wt%.

The binder in the binder emulsion may comprise further additives, e.g. softening agents such as wax or penetration index boosters such as waxes, polyphosphoric acid and ethylene polymers.

The binder is in the form of an aqueous emulsion. The aqueous emulsion comprises the binder, water and one or more additives to assist in the formation and stabilisation of the emulsion. Suitable additives are known to the skilled person and may include cationic emulsifiers such as monoamines, diamines, quaternary ammonium compounds, alkoxylated amines or amidoamines; anionic emulsifiers such as fatty acids or sulphonates; non-ionic emulsifiers such as nonylphenolethyoxylates or ethoxylated fatty acids; or clays such as natural or processed clays and bentonites.

The solid content of the binder emulsion is preferably from 30 to 80wt%, more preferably from 40 to 70wt%.

The amount of binder emulsion added to the sand and filler is preferably from 10 to 50wt%, based upon the combined weight of the sand and filler.

In step (c), the binder emulsion is mixed with the sand and filler. It is typically not necessary to mix for an extended period (e.g. 30-180 seconds is likely to be sufficient). As the binder emulsion is added to and mixed with the sand and filler, the emulsion to break (the binder will agglomerate and water will be forced out of the slurry). However, it is still possible to obtain a substantially homogeneous slurry.

The present invention further provides a process for preparing a surface layer on a road or building, wherein a slurry is prepared by a process according to the invention and further comprising a step of applying the slurry to a surface of the road or building. The slurry may be applied by standard surfacing techniques.

### Examples

The invention will now be described by reference to examples which are not intended to be limiting of the invention.

### Preparation of Slurries

Three slurries were prepared by mixing sand and filler, adding a bituminous emulsion and mixing. For each slurry, 200g of silica sand (0/2 QSC) was weighed into a mixing bowl. Water was added and a surfactant (Stabiram^{®} MS3, an alkyl ammonium salt, from CECA) was added. The sand, water and surfactant were mixed with a spatula. Filler was added, little by little, into the mixing bowl whilst continuously stirring with a spatula. The binder emulsion was added to the mixing bowl whilst continuously stirring with the spatula. Mixing was continued for at least 60 seconds to obtain the slurry.

The components of the three slurries are given in Table 1:

**Table 1**

| | Sand | Filler | Binder Emulsion |
|---|---|---|---|
| Comparative Example 1 | 200g silica | 20g limestone | 45g cationic bitumen emulsion |
| Example 1 | 200g silica | 10g limestone 10g titanium dioxide | 45g cationic bitumen emulsion |
| Example 2 | 200g silica | 20g titanium dioxide | 45g cationic bitumen emulsion |

The solid content of the bitumen emulsion was 66.1wt%.

### Preparation of Surface Layers

Samples were prepared by applying the three slurries to sample plates. For each slurry, two samples were prepared.

### Testing for NOx Reduction

Samples were placed in a 275 L Atmospheric Simulation Chamber. The samples were kept at ambient temperature and background concentrations of NOx in the chamber were recroded. NOx gases (NO and NO₂) were then introduced and monitored during 15 minutes in the dark and 3.5 hours under UV radiation (provided by an ULTRA-VITALUX 300W from OSRAM^{®}). Monitoring was carried out using an APNA-360 HORIBA model NOx monitor. Experiments were conducted in the presence of different initial concentrations of NOx.

Table 2 shows the changes in NOx concentration in the presence of the samples:

**Table 2**

| | | | Initial concentrations (ppb) | | | Final concentrations (ppb) | | | Variations (%) | | | Surface loss factor (ppb s⁻¹ cm⁻²) |
|---|---|---|---|---|---|---|---|---|---|---|---|---|
| | | | NO | NO₂ | NOₓ | NO | NO₂ | NOₓ | NO | NO₂ | NOₓ | |
| Comparative Example 1 | Sample 1 | Run 1 | 99.1 | 40.2 | 139.3 | 93.2 | 39.9 | 133.1 | -6.0 | -0.7 | -4.5 | 1.15x10⁻⁵ |
| | | Run 2 | 202.3 | 102.1 | 304.4 | 195.7 | 96.2 | 291.9 | -3.3 | -5.8 | -4.1 | 1.67x10⁻⁵ |
| | Sample 2 | Run 1 | 218.5 | 93.8 | 312.3 | 205.1 | 81.9 | 287 | -2.6 | -8.6 | -4.5 | 1.99x10⁻⁵ |
| | | Run 2 | 129.6 | 23.0 | 152.6 | 123.7 | 22.2 | 145.9 | -4.6 | -3.5 | -4.4 | 6.36x10⁻⁵ |
| Example 1 | Sample 1 | Run 1 | 190.0 | 48.5 | 238.5 | 170.7 | 46.5 | 217.2 | -10.2 | -4.1 | -8.9 | 3.13x10⁻⁵ |
| | | Run 2 | 99.3 | 19.4 | 118.7 | 83.9 | 26.4 | 110.3 | -15.5 | 36.1 | -7.1 | 1.25x10⁻⁵ |
| | Sample 2 | Run 1 | 1.93.2 | 52.7 | 245.9 | 183.8 | 46.0 | 229.8 | -4.9 | -12.7 | -6.5 | 3.29x10⁻⁵ |
| | | Run 2 | 94.8 | 18.7 | 113.5 | 93.8 | 22.2 | 116.0 | -1.1 | 18.7 | 2.2 | 9.17x10⁻⁶ |
| | | Run 3 | 102.5 | 27.8 | 130.3 | 93.5 | 27.3 | 120.8 | -8.8 | -1.8 | -7.3 | 1.23x10⁻⁵ |
| Example 2 | Sample 1 | Run 1 | 204.7 | 30.2 | 234.9 | 70.1 | 98.7 | 168.8 | -65.8 | 226.8 | -28.1 | 9.06x10⁻⁵ |
| | | Run 2 | 214.8 | 32.5 | 247.3 | 172.8 | 36.0 | 208.8 | -19.6 | 10.8 | -15.6 | 5.56x10⁻⁵ |
| | | Run 3 | 101.0 | 22.6 | 123.6 | 63.4 | 32.3 | 95.7 | -37.2 | 42.9 | -22.6 | 3.71x10⁻⁵ |
| | | Run 4 | 100.7 | 27.6 | 128.3 | 70.7 | 32.8 | 103.5 | -29.8 | 18.8 | -19.3 | 3.61x10⁻⁵ |
| | Sample 2 | Run 1 | 195.9 | 45.9 | 241.8 | 182.5 | 35.5 | 218.0 | -6.8 | -22.7 | -9.8 | 3.51x10⁻⁵ |
| | | Run 2 | 100.2 | 46.0 | 146.2 | 94.0 | 36.6 | 130.6 | -6.2 | -20.4 | -10.7 | 3.50x10⁻⁵ |

The greatest reduction in NOx is observed with the samples according to Example 2, which have the greatest amount of titanium dioxide filler. Significant reduction in NOx is also observed with the samples according to Example 1.

## Claims

1. A process for preparing a slurry for surfacing applications, comprising steps of:
a) mixing sand and filler, wherein at least 30wt% of the filler is titanium dioxide;
b) adding a binder emulsion to the mixture of sand and filler; and
c) mixing the binder emulsion with the sand and filler.

2. A process according to claim 1, wherein at least 80wt% of the filler is titanium dioxide.

3. A process according to claim 1 or claim 2, wherein the weight ratio of sand to filler is in the range of from 1:1 to 50:1.

4. A process according to any preceding claim, wherein the binder is a bituminous binder.

5. A process according to any one of claims 1 to 3, wherein the binder is a clear synthetic binder.

6. A process for preparing a surface layer on a road or building, wherein a slurry is prepared by a process according to any preceding claim and further comprising a step of applying the slurry to a surface of the road or building.

7. Use of a slurry prepared by a slurry according to any one of claims 1 to 5, to prepare a surface layer and thereby reduce atmospheric pollution.
